(19) Europäisches Patentamt
European Patent Office
Office européen des brevets

(11) **EP 4 414 660 A1**

(12) **EUROPEAN PATENT APPLICATION**
published in accordance with Art. 153(4) EPC

(43) Date of publication:
**14.08.2024 Bulletin 2024/33**

(21) Application number: **22879005.1**

(22) Date of filing: **26.06.2022**

(51) International Patent Classification (IPC):
**G01C 21/34** $^{(2006.01)}$          **G08G 1/16** $^{(2006.01)}$
**B60T 8/172** $^{(2006.01)}$

(52) Cooperative Patent Classification (CPC):
**B60T 8/172; G01C 21/34; G08G 1/16**

(86) International application number:
**PCT/RU2022/050201**

(87) International publication number:
**WO 2023/059221 (13.04.2023 Gazette 2023/15)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **04.10.2021 RU 2021128897**

(71) Applicant: **Obshchestvo s Ogranichennoi
Otvetstvennostiu
"Evokargo"
Moscow, 129085 (RU)**

(72) Inventors:
• **KIBALOV, Vladislav Igorevich
Zarechnyy, 624250 (RU)**
• **SHIPITKO, Oleg Sergeevich
Moscow, pos. Moskovskiy, 108811 (RU)**

(74) Representative: **Osmans, Voldemars et al
Agency Tria Robit
P.O. Box 22
LV-1010 Riga (LV)**

(54) **METHOD OF CONTROLLING VEHICLE DRIVING CHARACTERISTICS**

(57)     The invention relates to methods of controlling the driving of highly automated vehicles (HAVs), which consists in that, while an HAV is driving, an on-board computer receives data from wheel encoders and from a steering wheel position sensor and the following are generated: a current state of the HAV and hypotheses about the position of the HAV, as well as a planned path, in the form of a desired trajectory on a map, and a digital map of obstacles. A future trajectory is predicted, the obtained trajectory is applied to each hypothesis about the position of the HAV, and each of the predicted trajectories is checked for the presence of collisions, wherein the probability of a collision with obstacles is estimated. On the basis of the data obtained, a safe driving speed is determined as the maximum permissible speed at which the probability of the HAV entering into a collision does not exceed a given threshold. The safe speed value obtained is sent to a speed control unit which sets control signals for the traction motor and the braking system.

Fig. 1

**EP 4 414 660 A1**

## Description

### FIELD OF THE INVENTION

The invention relates to the field of navigation of unmanned mobile ground systems, namely to methods of automatic movement control of highly automated vehicles (HAVs) with the ability to control their speed in order to ensure a guaranteed level of movement safety.

### BACKGROUND

In order for HAVs to become part of an intelligent transport system, they must guarantee a certain level of safety. To achieve this goal, it is necessary to develop algorithms for controlling HAVs to minimize the likelihood of collisions with static and dynamic obstacles while moving along a given trajectory.

The following technical solutions are known from the pertinent art. There is a known method for controlling an unmanned vehicle (RU2649962 patent), according to which a mathematically processed image of a roadway with scanned elements is extracted from the long-term memory of a computer, then it is mathematically converted into an image in perspective, after that a real image of the roadway is obtained, and the real image of the roadway is mathematically transformed and images of scanned elements are obtained. Images of the roadway with scanned elements are compared with a mathematically transformed real image of the roadway, and control actions for the unmanned vehicle are developed based on the results. The mathematically processed images of the roadway with scanned elements from long-term memory and real images are obtained from at least two linear photosensitive devices. The sequence of actions for controlling the unmanned vehicle is based on the analysis and includes the preparatory stage and the stage of calculating the current steering angle, current control of the accelerator pedal, determining the presence of obstacles, building an image of the roadway and analyzing its correspondence to the real image, which then leads to developing control actions.

A method of automatic vehicle control is known (US2019171204 application), according to which the condition detection module of the vehicle in question receives vehicle speed data from a vehicle speed sensor, acceleration data from an acceleration sensor, and steering angle data from a steering angle sensor, and determines the driving condition of the vehicle in question based on these data fragments. In accordance with the current condition, the on-board computer generates control actions for optimal trajectory.

The main disadvantage for the above-mentioned technical solutions is the lack of consideration of the uncertainty of the automated/unmanned vehicle's position, which leads to a decrease in the accuracy of determining the position of the vehicle relative to static and dynamic obstacles around, and, as a result, the control actions do not ensure the safe movement of the vehicle along its trajectory.

There is a known method for planning the trajectories of a vehicle from the starting point to the end point, avoiding a variety of static and/ or dynamic obstacles according to patent US7447593, which consists in building a graph of trajectories connecting the starting point to the end point, taking into account the possible position of obstacles. Various rules are used to expand, suspend expansion and stop the expansion of nodes in the trajectory graph. The obtained trajectories are evaluated relative to the specified constraints. Based on the trajectory graph, at least one trajectory is obtained connecting the starting point to the end point, satisfying the specified constraints. Then the vehicle moves along the obtained trajectory.

The disadvantage of the presented method is that in the process of forming a trajectory tree, the restrictions on the trajectory planning time, defined by the dynamics of the external environment, are not taken into account.

A method of autonomous vehicle control is known (US7613553 patent), which consists in the fact that during the movement of the vehicle along the current trajectory, information is received from sensors, and on that basis a model of the current state of the external environment is updated, reflecting the presence of static and dynamic obstacles. Based on the updated model of the current state of the external environment, the model of the predicted state of the external environment is updated at the time when the autonomous vehicle reaches the endpoint of the current trajectory. Based on the updated model of the predicted state of the external environment, many possible trajectories of further movement from the endpoint of the current trajectory are determined. Each trajectory from the generated set of possible trajectories is compared on a digital map. The formed set of possible trajectories is used to select one with the maximum expected utility, and the new trajectory is implemented when the end point of the current trajectory is reached.

This method of autonomous vehicle control is characterized by performing a large number of calculations and therefore powerful computers are required to implement it. In addition, this method is focused specifically on underwater vehicles. Thus, the presented control method cannot be widely used to control unmanned ground vehicles.

The method disclosed in US7613553 is technically the closest to the claimed invention and can act as a prototype.

### SUMMARY

The task to be solved by the proposed invention is to create a method for adaptive control of the motion characteristics of a highly automated vehicle under conditions of uncertainty in the estimates of the surrounding situation and HAV's own position based on determining the safe speed as the maximum permissible speed; so that the probability of a collision with obstacles during the forecasting period does not exceed a predetermined threshold value. The assessment of the collision probability is carried out by comparing the predicted future trajectories for the entire space of control signals with a digital obstacle map that stores information about the objects of the environment in which the HAV is moving.

The technical result of the claimed invention is to increase the accuracy of determining the control effect on the HAV traction motor and braking system for movement safety.

In the proposed invention, the HAV safe speed is understood as the maximum permissible speed in the current section of the trajectory, at which the probability of a collision with static or dynamic obstacles is negligible.

The claimed technical result is achieved by the implementation of the method for adaptive control of an HAV driving characteristics, depending on the level of uncertainty in the assessment of environmental situation; wheel encoders and steering position sensor send signals to the computer, and the current status of HAV is assessed. Simultaneously, the onboard computer receives data from the camera, wheel encoders, and other sources of HAV position, then this data is used to form a set of hypotheses about the HAV position, formulate the planned path of travel, presented in the form of a sequence of points on the map, forming the desired trajectory and a digital map of the obstacles. Then the data is used to determine safe movement speed. To do that the future trajectory of HAV is determined; its kinematic stability is determined by finding the deviation from the desired trajectory and imposing the resulting trajectory for each hypothesis about the HAV position, thereby forming a set of hypotheses about future trajectories, and then each predicted trajectory is checked for potential collisions by comparison with a digital map of obstacles. This allows estimating the probability of collision on the basis of future trajectories for the current speed value, and safe speed is chosen as the maximum allowable speed for which the probability of collision the forecast period does not exceed a predetermined threshold value. The determined safe speed value is sent to the speed control unit, which sends the control signals to the traction motor and braking system, ensuring safe movement.

Thus, the implementation of the specified sequence of actions according the claimed method, allows assessing the surrounding situation in the presence of static and dynamic obstacles, as well as HAV's own position, in real time to determine with high accuracy the safe speed in a given section of the trajectory for generating control signals to the traction motor and braking system, ensuring the safe movement of the vehicle in difficult and ambiguous road situations.

**DRAWINGS**

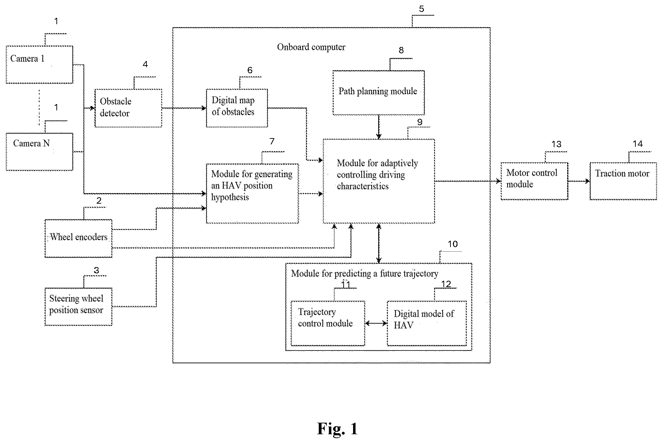

Fig. 1 shows a diagram of a safe motion control system for HAVs (implementation of proposed method), where 1 is a camera, 2 are wheel encoders, 3 is a steering position sensor, 4 is an obstacle detector, 5 is an on-board computer, 6 is a digital obstacle map, 7 is a module for forming hypotheses about the position of HAV, 8 is the path planning module, 9 is the module for adaptive control of the HAV movement characteristics, 10 is the future trajectory prediction module, 11 is trajectory control module, 12 is HAV digital model, 13 is the engine control unit, and 14 is the traction motor.

**DETAILED DESCRIPTION OF THE INVENTION**

The claimed method for adaptive control of HAV motion characteristics is carried out as follows (Fig. 1).

During the movement of a highly automated vehicle (HAV) along a given trajectory, the adaptive motion characteristics control module (9) as part of the on-board computer in the HAV (5), and the module receives data from the wheel encoders (2) and the steering position sensor (3). Based on that, the current condition of the HAV is determined: current speed and orientation. The pressure sensor in the brake circuit can act as an additional source of information about the vehicle speed.

Simultaneously, the HAV position hypothesis generation module (7) receives data from cameras (1), wheel encoders (2) and other data sources about the HAV's own position (for example, inertial navigation system, GNSS). Based on these data, many hypotheses about the HAV position are formed, each containing probabilistic information about the position of the HAV in space, including data on the HAV coordinates in the coordinate system associated with the map, and the angles of HAV orientation.

To assess the current position of the HAV, the preferred embodiment of the proposed method uses the Monte Carlo technique (particle filter), which allows to generate the specified set of hypotheses about the HAV position at a given time and the corresponding estimates of the probabilities of hypotheses.

At a subsequent stage, information about the uncertainty of the vehicle's own position is sent to the module (9).

The path planning module (8) is used to form a planned path, represented as a sequence of points on the map forming the desired trajectory, after that the received data is transmitted to the module (9).

To take into account the uncertainty in the environment assessment, a digital obstacle map (6) is formed, which can be represented as a pre-known map formed before the start of the HAV movement with unchanged boundaries of the carriageway marked on it.

In addition, during the HAV movement, images of the environment are sent from optical cameras (1) to the obstacle detector (4), through which the obtained images are processed using methods known from the state of the art with the identification of mobile or stationary environmental objects around the vehicle (i. e. obstacles). Combining information on selected environmental objects, a digital obstacle map (6) can also be formed - a raster or vector representation of the obstacles surrounding the HAV.

Further, using the adaptive motion control module (9), based on data obtained from sources (1-3) and modules (6-8), safe movement speed is cyclically determined.

To do this, the future trajectory of the HAV is estimated using the future trajectory prediction module (10), designed to calculate the leading section of the trajectory in real time based on the dynamic HAV model. The prediction module (10) includes a trajectory control module (9) consisting of a trajectory controller (direction and position deviation controllers) and a speed controller, and the digital dynamic model of HAV (12). The module (10) receives data on the status of the HAV (current speed, and position and orientation of HAV), specified path, speed limit and the duration of the prediction. The module (12) transmits its current state to the module (11), which generates control signals based on this data and sends them to a digital model (12), which, in accordance with the received control signal, changes its state and directs it via feedback to the module (11). These actions are carried out until a sequence of states of the digital model (12) is formed in the module (10), creating a predicted trajectory of movement with a fixed setting of the future speed.

Then the predicted motion trajectory is checked for kinematic stability by determining the deviation from the desired trajectory, and the result is sent to the adaptive motion control module (9).

The resulting predicted trajectory is superimposed on each hypothesis about the HAV position, forming a set of hypotheses about future movement trajectories, then each of the predicted trajectories is checked for collisions with obstacles by comparing these trajectories with a digital obstacle map (6), based on the results of this comparison, the probabilities of collisions with static and dynamic obstacles are determined. A future trajectory is considered safe if no hypothesis about the position of the HAV on the trajectory intersects with an obstacle.

It is important to note that when determining the probability of collision with static objects, the future trajectory prediction module (10) generates a future trajectory for a probabilistic assessment of the position of the HAV at time (t). Then the profile of the resulting trajectory is transferred so that its beginning would coincide with the current position of each hypothesis about the position of the HAV, and the profile rotates to the appropriate yaw angle. Thus, many hypotheses are formed about future trajectories of movement. The probability of collision with dynamic obstacles is determined in a similar way, except that for each position of the *i-th* hypothesis at time t, the future trajectory prediction module (10) generates the future trajectory separately, after which it is the relative profile of each trajectory that is checked for collisions with obstacles.

In the next step, the probability of collision with obstacles is estimated based on data on future movement trajectories for the current speed, taking into account the probabilities of collisions with static and dynamic obstacles:

$$p = 1 - (1 - p_{static}) * (1 - p_{dinamic}),$$

where $P_{static}$ is the probability of collision with static obstacles;

$P_{dinamic}$ is probability of collision with dynamic obstacles.

In accordance with the obtained probability of collision, the safe speed is chosen as the maximum allowable speed of the HAV, for which the probability of a collision during the forecasting period does not exceed a predetermined threshold value. The maximum allowable speed is determined by the physical properties of the HAV or the terrain along which the route is laid.

To implement safe adaptive control of the HAV, the obtained safe speed value is sent to the speed control unit, through which control signals are set to the traction motor and braking system, ensuring the movement at a safe speed.

**Claims**

1. A method for adaptive control of a highly automated vehicles (HAV) driving characteristics, depending on the level of uncertainty in a assessment of environmental situation, wherein the method comprising the following steps:

   sending signals from wheel encoders and steering position sensors of the HAV to an onboard computer of the HAV;
   calculating a current status of the HAV by the collected signals;
   simultaneously receiving on the onboard computer data from a camera, wheel encoders, and other sources of HAV position;
   forming using collected data on the onboard computer a set of hypotheses about the HAV position;
   forming a planned path of travel of the HAV, wherein the planned path presented in the form of a sequence of points on a map, forming a desired movement trajectory;
   forming a digital map of the obstacles;
   determining a safe movement speed using col-

**EP 4 414 660 A1**

lected data, wherein a future movement trajectory of HAV is determined;

calculating kinematic stability of the future movement trajectory of the HAV by finding a deviation from the desired movement trajectory and imposing a resulting trajectory for each hypothesis about the HAV position;

forming a set of hypotheses about future movement trajectories;

checking each predicted trajectory for potential collisions by comparison with the digital map of obstacles;

estimating the probability of collision on the basis of future trajectories for the current speed value of the HAV;

choosing safe speed as the maximum allowable speed for which the probability of collision the forecast period does not exceed a predetermined threshold value;

sending determined safe speed value to a speed control unit of the HAV, which sends the control signals to the traction motor and braking system ensuring movement at safe speed.

**Fig. 1**

**EP 4 414 660 A1**

## INTERNATIONAL SEARCH REPORT

| | International application No. |
|---|---|
| | PCT/RU 2022/050201 |

<table>
<tr><td colspan="3">A.   CLASSIFICATION OF SUBJECT MATTER</td></tr>
<tr><td colspan="3" align="center">G01C 21/34 (2006.01)    G08G 1/16 (2006.01)    B60T 8/172 (2006.01)</td></tr>
<tr><td colspan="3">According to International Patent Classification (IPC) or to both national classification and IPC</td></tr>
</table>

B.   FIELDS SEARCHED

Minimum documentation searched (classification system followed by classification symbols)

G01C 21/00 - 21/36, G08G 1/00-1/16

Documentation searched other than minimum documentation to the extent that such documents are included in the fields searched

Electronic data base consulted during the international search (name of data base and, where practicable, search terms used)

PatSearch (RUPTO internal), USPTO, PAJ, K-PION, Espacenet

C.   DOCUMENTS CONSIDERED TO BE RELEVANT

| Category* | Citation of document, with indication, where appropriate, of the relevant passages | Relevant to claim No. |
|---|---|---|
| A | US 7447593 B2 (REGINA I. ESTKOWSKI et al.) 04.11.2008 | 1 |
| A | RU 2649962 C1 (SAIKIN ANDREI MIKHAILOVICH et al.) 10.04.2018 | 1 |
| A | US 10994740 B2 (SUBARU CORPORATION) 04.05.2021 | 1 |
| A | CN 111708372 B (GUANNGZHOU SAITE INTELLIGENT TECHNOLOGY CO LTD) 29.12.2020 | 1 |
| A | EP 3491475 A1 (INSTITUT VEDECOM) 05.06.2019 | 1 |
| A | RU 2744642 C1 (SAIKIN ANDREI MIKHAILOVICH et al.) 12.03.2021 | 1 |
| A | WO 2021/062891 A1 (HONG KONG APPLIED SCIENCE AND TECHNOLOGY RESEARCH INSTITUTE COMPANY LIMITED) 08.04.2021 | 1 |

☐  Further documents are listed in the continuation of Box C.      ☐  See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 07 October 2022 (07.10.2022) | 03 November 2022 (03.11.2022) |

| Name and mailing address of the ISA/ RU | Authorized officer |
|---|---|
| | |
| Facsimile No. | Telephone No. |

Form PCT/ISA/210 (second sheet) (July 1998)

**EP 4 414 660 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- RU 2649962
- US 2019171204 A
- US 7447593 B
- US 7613553 B